# FASCICULE DE BREVET EUROPEEN

(11) **EP 0 526 362 B1**
(45) Date de publication et mention de la délivrance du brevet: **22.05.1996**
(21) Numéro de dépôt: 92420258.3
(22) Date de dépôt: 31.07.1992
(51) Int. Cl.: B23K 1/00, B23K 23/00

(54) **Procédé pour braser in situ un élément métallique sur un support métallique et dispositif pour sa mise en oeuvre**
Verfahren und Vorrichtung zum Hartlöten von einen metallischen Element auf einem metallischen Träger
Method and apparatus for exothermic brazing of a metallic piece to a metallic support structure

(30) Priorité: 02.08.1991 FR 9110107
(43) Date de publication de la demande: 03.02.1993
(73) Titulaire: ERICO INTERNATIONAL CORPORATION, Solon Ohio 44139 (US)
(72) Inventeur: Fuchs, Jean Claude, F-42580 l'Etrat (Loire) (FR)
(74) Mandataire: Perrier, Jean-Pierre

(56) Documents cités:
- EP-A- 0 174 285
- DE-B- 1 016 096
- FR-A- 2 657 283
- US-A- 3 358 356

## Description

L'invention concerne la fixation par brasure d'un élément métallique, tel que l'extrémité d'un conducteur électrique ou l'extrémité d'un moyen de fixation, sur un autre support, tel qu'un tube, un tuyau, un rail ou un élément massif, réalisé dans un métal différent.

Actuellement, cette liaison par brasure est effectuée, après meulage de la surface réceptrice et mise en place d'un flux de décapage, en disposant l'élément à braser sur le support, puis en élevant la température du support récepteur et de l'élément à braser, au moyen d'un chalumeau oxyacétylénique, et cela jusqu'à ce que la température des éléments en présence favorise le cheminement, entre eux et par capillarité, de la brasure fondue.

Cette technique de liaison, bien connue et bien maîtrisée, nécessite un ensemble oxyacétylénique composé de deux bouteilles, d'un détendeur, de tuyaux et d'un chalumeau, donc un ensemble volumineux et encombrant ne pouvant pas toujours être amené à pied d'oeuvre sur un chantier extérieur.

Par ailleurs, dans certaines conditions, et par exemple lorsque le support est massif et très conducteur de la chaleur, ou est parcouru par un fluide favorisant la dissipation des calories, l'énergie calorifique fournie par un chalumeau oxyacétylénique est insuffisant pour porter le support à la température de fusion de la brasure.

L'invention vise à remédier à ces inconvénients en fournissant un procédé de brasage in situ remplaçant l'apport calorifique fourni par l'ensemble oxyacétylénique, lourd, encombrant et exigeant un certain doigté pour réaliser une bonne brasure, par un apport calorifique produit par une réaction métallothermique.

On connaît par le brevet allemand 925391 un procédé pour lier bout à bout deux conducteurs consistant, d'une part, à entourer la zone de liaison par une cartouche contenant un mélange métallothermique et, d'autre part, et lors de la réaction exothermique entraînant la fusion des extrémités des conducteurs, à écrases ces zones fondues l'une contre l'autre. Cette technique, nécessitant la fusion locale des éléments à assembler, exige une grande quantité de mélange métallothermique pour obtenir la puissance calorifique nécessaire à cette fusion et nécessite aussi de manipuler les éléments pendant la réaction exothermique pour les rapprocher et obtenir le refoulement nécessaire à leur liaison. Elle est donc inapplicable à la liaison par brasure d'un conducteur électrique sur un support massif et inapplicable sur un chantier extérieur ne disposant pas de moyens mécaniques pour assurer le refoulement des zones fondues.

Par le brevet allemand 1016096, on connaît une technique de brasure in situ consistant à fixer sur un support une cosse, préalablement sertie sur un conducteur électrique, en faisant fondre une brasure, incluse dans un logement de la cosse au moyen d'une réaction métallothermique effectuée dans un creuset, creuset dont la paroi comporte une ouverture adaptée à la cosse et permettant le contact direct de cette cosse avec le mélange et la réaction métallothermique.

Ce procédé nécessite de doter le conducteur d'une cosse spéciale et, après la réaction assurant le brasage in situ, de retirer le creuset pour dégager la masse métallique fondue, issue de la réaction et liée à la cosse. Cette masse métallique, qui ne participe pas à la liaison de la cosse sur le support, forme une protubérance qui ne peut être enlevée qu'à la lime, puisque sa liaison par fusion avec le dos de la cosse est plus résistante que la liaison par brasure de la cosse sur le récipient. Un tel procédé ne peut pas être utilisé pour fixer l'extrémité d'un conducteur électrique sur un tuyau métallique ou sur un autre support, car la protubérance est gênante pour la mise en place sur la zone de liaison d'une enveloppe de protection, mais aussi lors des manipulations, car elle favorise l'accrochage de la zone brasée, avec le risque d'en altérer la qualité. Par ailleurs, le positionnement du creuset sur la cosse, en appui sur le support, exige une attention particulière pour obtenir une bonne brasure et impose de prévoir des creusets différents, chaque fois que la cosse est orientée différemment par rapport au support ou chaque fois que le support est disposé différemment par rapport au plan vertical.

La présente invention a pour but de remédier à ces inconvénients en fournissant un procédé de brasure in situ mettant à profit l'apport calorifique d'une réaction métallothermique, sans utiliser pour la liaison le mélange obtenu, procédé qui est simple à mettre en oeuvre, qui est applicable quelle que soit la position horizontale ou verticale du support ou la disposition relative de l'élément rapporté et qui ne conduit à aucune protubérance sur la zone brasée tout en n'exigeant, après réaction, aucun nettoyage complémentaire.

Le procédé selon l'invention consiste :
- a donner à la partie devant être brasée, et appartenant à l'élément métallique devant être fixé sur le support, une section transversale aplatie presentant deux grandes faces opposées,
- a imprégner de brasure au moins l'une des grandes faces opposées de cette partie,
- a plaquer cette face imprégnée de brasure sur une face du support, préparée pour la brasure,
- à plaquer sur l'autre grande face de la partie à braser un creuset, comportant un logement de positionnement de cette partie, logement dont la partie, apte à venir en contact avec cette face, possède une épaisseur la rendant perméable à l'apport calorifique engendré par la réaction métallothermique dans le creuset et constitue barrière au mélange fondu obtenu par cette réaction,
- et, après déclenchement de la réaction dans le creuset et refroidissement, à retirer le creuset contenant le mélange fondu.

Lors de la réaction métallothermique, l'énergie calorifique se transmet, à travers la paroi perméable du fond du creuset, à la partie à braser qui est plaquée contre cette paroi, et provoque rapidement la fusion de la brasure. Après retrait du creuset, la partie brasée a un encombrement égal à son épaisseur et ne risque donc pas d'être accrochée lors de manipulation du support qui la porte.

Grâce au positionnement de la partie à braser, aux grandes surfaces d'échange entre cette partie, et, d'une part, le fond du creuset, et, d'autre part, la surface du support, au dosage parfaitement maîtrisé du mélange métallothermique déterminant l'apport calorifique, mais aussi grâce à la possibilité de choisir la matière constitutive du creuset en fonction de la perméabilité thermique recherchée et à la possibilité d'ajuster cette perméabilité en jouant avec l'épaisseur de la paroi, ce procédé, qui peut être utilisé en atelier ou sur le chantier, permet d'obtenir une brasure de qualité excellente et constante, indépendante de tout facteur humain.

L'invention concerne également un dispositif pour la mise en oeuvre de ce procédé.

Ce dispositif est du type mettant en oeuvre un creuset et des moyens de maintien, se fixant sur le support sur lequel doit être brasé un élément métallique et communiquant au creuset un effort en direction du support.

Dans le dispositif selon l'invention, le creuset ne comporte qu'une chambre de réception du mélange métallothermique et du mélange d'amorçage et cette chambre est munie d'une paroi qui, perméable à l'énergie calorifique de la réaction métallothermique, constitue un écran au mélange fondu obtenu par cette réaction et qui comporte une face apte à venir directement en appui sur la face en vis à vis de la partie devant être brasée sur le support et délimitant, avec au moins une autre face perpendiculaire, un logement de positionnement transversal de la partie devant être brasée, tandis que ce creuset est monté dans les moyens de maintien avec possibilité de coulissement suivant une direction sensiblement perpendiculaire à sa paroi perméable et que ces moyens de maintien comportent des moyens effaçables aptes, en position de brasage, à prendre appui sur le creuset pour plaquer celui-ci exclusivement sur la partie à braser.

Grâce au montage flottant du creuset dans les moyens de maintien sur le support, la paroi de plus faible épaisseur du creuset est parfaitement plaquée sur la partie à braser et plaque cette partie sur le support. Il en résulte que les faces de l'élément à braser, qui présentent chacune une large surface, sont parfaitement maintenues en contact avec les parois en vis à vis.

Dans une forme d'exécution de l'invention, le creuset est constitué par un étui qui, en forme de godet ouvert, est associé à un couvercle, est réalisé en matériau résistant à au moins une réaction exothermique, et contient une dose de mélange métallothermique et une dose d'un mélange d'amorçage.

Cet étui, qui possède bien entendu des moyens de positionnement de l'élément à braser et une paroi perméable à l'énergie calorifique, n'est utilisable qu'une fois et est donc jeté, après usage en même temps que le mélange fondu qu'il contient.

D'autres caractéristiques et avantages ressortiront de la description qui suit en référence au dessin schématique annexé représentant, à titre d'exemples, une forme de mise en oeuvre du procédé et plusieurs formes d'exécution du dispositif pour sa mise en oeuvre.
Figure 1 est une vue de côté en coupe transversale montrant schématiquement les différents éléments mis en oeuvre par ce procédé de brasage in situ,
Figure 2 est une vue en coupe transversale montrant les mêmes éléments dans la phase de brasage,
Figure 3 est une vue de côté en coupe transversale montrant les deux éléments liés par brasure,
Figure 4 est une vue en perspective montrant une forme d'exécution du dispositif pour la mise en oeuvre du procédé, à la brasure sur un corps cylindrique,
Figure 5 est une vue de côté en coupe transversale du dispositif de figure 4 le montrant avant déclenchement de la réaction exothermique,
Figure 6 est une vue de côté en élévation montrant, à échelle réduite, l'application du procédé et du dispositif à la brasure des extrémités d'un conducteur de liaison électrique entre deux éléments de rail,
Figure 7 est une vue en perspective du dispositif pour la réalisation de la brasure des extrémités du conducteur de figure 6,
Figure 8 est une vue en coupe transversale partielle du dispositif de figure 7 passant par le plan médian d'un creuset.

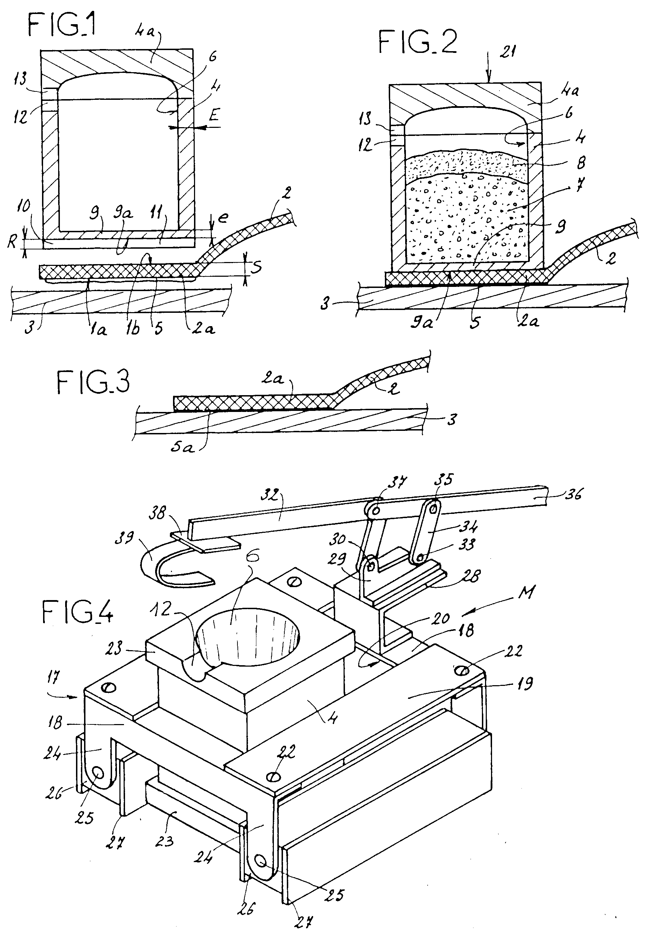

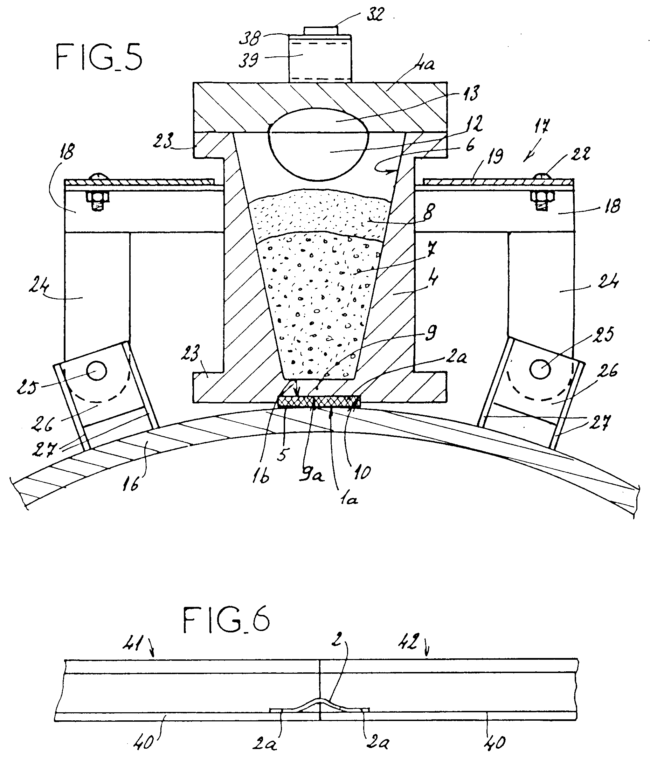

Comme décrit dans le préambule, ce procédé de brasure in situ d'un élément metallique 2 sur un support métallique 3, de la nature différente, met en oeuvre un creuset 4. L'élément 2 peut être constitué par un câble métallique, par une tresse métallique, par un empilage de feuillards métalliques isolé ou non, mais aussi par une pièce plate métallique ayant une fonction de fixation, d'accrochage ou autre. Quant au support 3, il peut être constitué par une tôle, comme représenté aux figures 1 à 3, par une virole tubulaire, comme représenté à la figure 5, par le patin d'un rail, comme montré aux figures 6 à 8, ou par toute pièce en métal ou alliage métallique ne pouvant pas supporter une température trop élevée, par exemple pour éviter une trempe localisée ou une décarburation. La liaison peut être réalisée entre des faces horizontales, verticales ou dans toute autre position intermédiaire.

Selon l'invention, la partie 2a de l'élément 2 devant être brasé sur le support 3, et par exemple l'extrémité d'un conducteur multifeuilles, d'une tresse ou d'un conducteur à torons, est d'abord conformée pour présenter deux elle ne la possède pas déjà, une section transversale aplatie présentant deux grandes faces opposées 1a-1b, et par exemple une section transversale rectangulaire. Après cette opération, la pairie 2a est décapée et imprégnée de brasure 5 au moins sur sa face 1a devant venir en contact avec le support 3. Après préparation de la surface du support 3, et par exemple meulage et dépôt d'un flux de décapage, la face 1a de la partie 2a est posée sur cette surface, puis il est procédé à la mise en place du creuset 4 sur la face 1b.

Ce creuset qui est réalisé en graphite ou en tout autre matériau, comme cela sera précisé plus loin, se différencie de ceux existants par le fait qu'il ne comporte qu'une chambre interne 6 destinée à recevoir une dose d'un mélange pulvérulent 7, d'oxydes métalliques, avec une dose 8 d'un mélange d'amorçage, et par le fait qu'il comporte une paroi perméable à l'apport calorifique de la réaction métallothermique, paroi qui, dans cette forme d'exécution, est constituée par un fond 9 ayant localement une épaisseur e inférieure à celle E des autres parois, mais pouvant aussi, dans une variante, avoir la même épaisseur. La face externe 9a du fond constitue, avec au moins une face perpendiculaire 11, l'une des faces d'un logement 10 de positionnement de la partie 2a, logement qui, comme montré à la figure 5, peut être constitué par une rainure longitudinale traversant de part en part le creuset. La profondeur p de ce logement ou rainure est inférieure à l'épaisseur s de la partie 2a, afin qu'en aucun cas l'extrémité inférieure du creuset 4 ne puisse venir en contact avec le support 3. Ce creuset est associé à des moyens de maintien, désignés de façon générale par M et exercant sur lui une poussée dans le sens de la flèche 21 de figure 2, poussée plaquant sa face 9a sur la face supérieure 1b de l'élément 2a, et plaquant la face 1a de cet élément sur le support 3.

De façon connue, ce creuset est associé à un couvercle 4a. Sa paroi périphérique, et celle du couvercle sont traversées localement par des canaux d'allumage, respectivement 12 et 13, permettant à des étincelles générées à l'extérieur par un allumeur à pierre, ou par tout autre moyen générant des étincelles, de pénétrer à l'intérieur du logement 6 du creuset pour allumer le mélange d'amorçage 8.

La réaction exothermique engendrée par l'inflammation du mélange métallothermique se transmet de manière préférentielle à travers la paroi perméable du fond 9, et, en conséquence, se transmet à la partie 2a et, de 1à, au support 3. Grâce aux grandes surfaces en contact entre le fond 9, la partie 2a et le support 3, l'énergie calorifique irradie la totalité des surfaces en présence et provoque rapidement la fusion de la brasure 5 imprégnant la face 1a de la partie 2a.

Après refroidissement, l'ensemble du godet 4 est retiré, d'autant plus aisément que son fond 9 a formé écran et s'est opposé à ce que la masse de métal fondu, contenue dans le logement 6, vienne en contact avec la partie 2a. Comme le montre la figure 3, après extraction du creuset 4, la partie 2a est parfaitement liée au support 3, par une couche de brasure homogène 5a, et ne comporte aucune excroissance. Le mélange fondu se solidifie à l'intérieur du creuset 4 et, après démoulage, est jeté.

On conçoit aisément que ce mode de liaison peut être appliqué pour assurer la liaison de tout élément métallique sur tout support métallique, sans qu'il soit besoin d'utiliser d'autres moyens que les moyens de maintien du creuset assurant en même temps le positionnement de l'élément brasé sur le support. Le creuset 4 peut être réalisé en céramique, ou en tout autre matériau réfractaire. Il peut aussi être constitué par un étui réalisé dans un matériau résistant à au moins une réaction exothermique et, par exemple, être constitué par un godet métallique et notamment en aluminium. Dans ces conditions, le godet est jeté après usage, en même temps que le mélange fondu qu'il contient.

Cette solution étend considérablement le champ d'application du procédé de brasage in situ selon l'invention.

La forme d'exécution des moyens de maintien M, représentée aux figures 4 et 5, est destinée à assurer le maintien d'un creuset 4 par rapport à un corps tubulaire 16, tel qu'un tuyau destiné à être parcouru par un gaz ou par un fluide. Le châssis de ces moyens de maintien est constitué par un cadre, désigné de façon générale par 17, et composé de deux cornières transversales 18 et de deux barres longitudinales 19, délimitant entre elles une ouverture centrale 20. Celle-ci a une section générale identique à celle du corps du creuset 4, mais possède des dimensions suffisantes pour tolérer les déplacements verticaux de ce creuset par rapport au cadre 17. Les barrettes 19 sont fixées aux cornières 18 par des vis 22 ou par des moyens équivalents permettant de démonter l'une de ces barrettes pour l'introduction du creuset 4 dans le cadre 17. Le creuset 4 est muni, à chacune de ses extrémités, de collerettes 23 le ceinturant et constituant, avec les éléments du cadre 17, des butées limitant sa course de translation verticale et le rendant solidaire de ce cadre.

Les cornières transversales 18 sont solidaires de chapes verticales 24, saillant vers le bas et disposées à proximité de chacune de leurs extrémités. Les chapes en vis à vis constituent paliers pour des axes longitudinaux 25, disposés parallèlement à l'axe longitudinal du creuset 4 et, plus précisément, parallèlement à l'axe longitudinal de la rainure 10, ménagée dans la face inférieure de ce creuset, comme montré à la figure 5.

Sur chaque axe 25, est articulé un barreau magnétique 26, lui-même rendu solidaire, par des vis transversales non représentées, de plaquettes 27 dépassant verticalement de ce corps pour constituer, par leurs bords inférieurs, surfaces d'appui sur la surface cylindrique du corps 16.

Comme montré à la figure 4, la cornière transversale 18, qui est disposée à l'opposé du canal d'allumage 12 du creuset 4, est solidaire d'une console 28 portant une patte 29 sur laquelle sont articulés, d'une part et en 30, un levier d'appui 32, et d'autre part et en 33, une biellette 34 articulée en 35 sur un levier d'actionnement 36. Ce dernier levier est articulé en 37 sur le coude que comporte le levier 32, tandis que le levier 32 est muni, à son extrémité libre, d'une platine 38 sur laquelle est fixé un moyen de compression élastique, tel qu'une lame ressort cintrée 39.

Bien entendu, le dispositif qui vient d'être décrit pour assurer la mise en pression du creuset sur la partie 2a à braser peut être remplacé par tout autre moyen équivalent, exerçant sur le creuset une compression élastique en direction de son fond 9.

Pour assurer la brasure in situ avec ces moyens de maintien, il faut d'abord positionner ceux-ci sur le corps cylindrique 16 en disposant les barreaux magnétiques 26 de part et d'autre de la surface préparée sur ce corps, tout en vérifiant le bon contact des lamelles 27 avec ce corps cylindrique pour obtenir une bonne fixation magnétique. Après avoir glissé dans la rainure 10 du creuset, la partie 2a devant être brasée, il faut remplir la chambre interne 6 du creuset 4 en mélange métallothermique et en mélange d'amorçage, mettre en place le couvercle 4a, actionner le levier 36, pour amener la lame élastique 39 en appui sur le couvercle 4a et plaquer ainsi la face 9a de la rainure sur la face 1b de la partie 2a à braser, et, enfin, d'amorcer la réaction métallothermique.

On notera que ces diverses opérations s'effectuent très rapidement, et qu'avec ces moyens de maintien, la partie 2a présentant la face 1a, imprégnée de brasure, est parfaitement positionnée par rapport au fond du creuset, et parfaitement maintenue entre ce creuset et le corps 16.

Après refroidissement, c'est à dire après un temps suffisant pour permettre le refroidissement de la brasure qui a fondu, mais également suffisant pour permettre la préhension manuelle des moyens de maintien dont la température a été élevée par la réaction exothermique, ces moyens de maintien sont extraits du corps 16. Après actionnement du levier 36, pour libérer le couvercle du creuset, il est procédé à l'évacuation hors du creuset du mélange solidifié ayant provoqué la réaction.

Il faut noter que la rapidité de la réaction exothermique et, en conséquence, la rapidité du transfert calorifique à la partie 2a à braser, associée à une parfaite maîtrise des conditions de mélange et des conditions de dosage pour obtenir une énergie calorifique déterminée, permet d'utiliser ce dispositif de maintien pour fixer par brasure un élément métallique sur un corps tubulaire 16 parcouru par un fluide ayant tendance à dissiper les calories venant de l'extérieur.

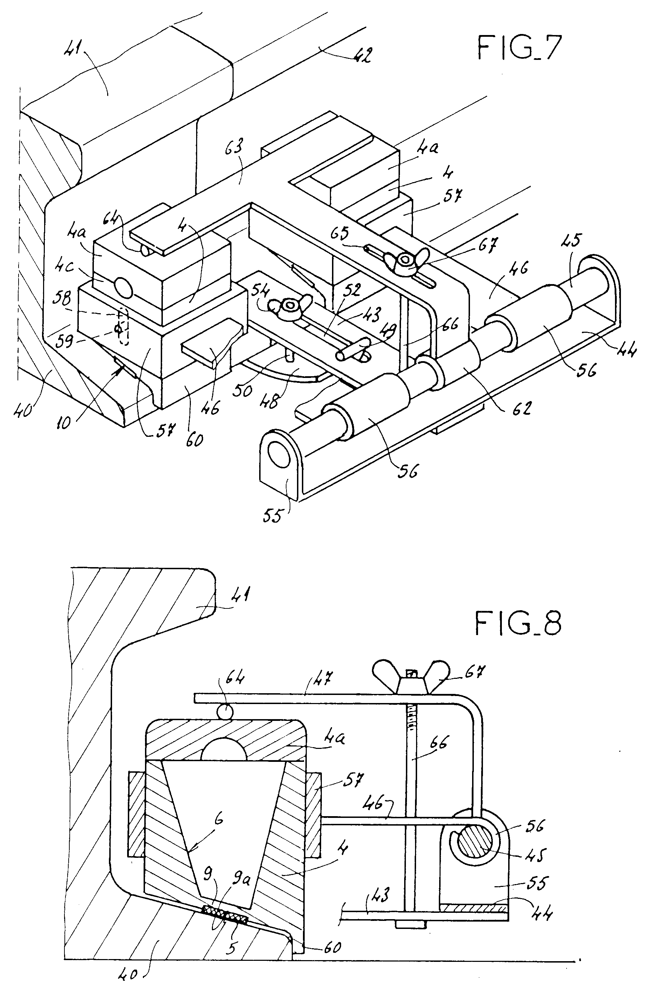

Le dispositif de maintien représenté aux figures 7 et 8 est destiné à la mise en oeuvre du procédé pour fixer par brasure, comme montré à la figure 6, les deux extrémités 2a d'un conducteur électrique 2 sur les patins 40 de deux rails 41-42 fixés bout à bout. Ces moyens de maintien sont composés d'une traverse 43, d'un longeron 44, portant un axe cylindrique 45, d'au moins un et de préférence de deux leviers de maintien 46 et d'un levier d'appui 47.

La traverse 43 est munie, à son extrémité libre, de moyens de fixation sur les patins 10. Dans cette forme d'exécution, ces moyens sont constitués par une pince dont les mâchoires sont formées par la traverse elle-même et par une bride 48 articulée sur elle en 49 et destinée à passer sous le patin du rail. Cette bride est reliée à la traverse par un moyen de serrage, constitué par une tige filetée 50 traversant une lumière 52 de la traverse et recevant, sur son extrémité filetée, un écrou de serrage 54. En pratique, cette pince est disposée de manière à chevaucher le plan de joint entre les deux rails 41 et 42.

Le longeron 44, qui est fixé sensiblement en son milieu sur l'autre extrémité de la traverse 43, est disposé parallèlement à l'axe longitudinal des rails et porte, par deux paliers 55, l'axe cylindrique 45 qui lui est parallèle. Chaque levier 46, muni d'un tourillon 56 articulé sur l'axe 45, est rendu solidaire, par son extrémité libre, d'un cadre 57 de maintien du creuset 4. Comme dans la forme d'exécution précédente, le creuset 4 est monté libre en translation verticale dans le cadre 57 sur une course limitée. A cet effet, le creuset comporte, débouchant d'au moins l'une 4c de ses faces latérales, une lumière verticale oblongue 58 dans laquelle peut coulisser librement l'extrémité d'un doigt 59 vissé dans le cadre 57.

La figure 8 montre que le fond 9 du creuset et sa face 9a sont inclinés, de manière à être parallèles à la face supérieure du patin 40, et que ce creuset comporte un talon 60 s'étendant vers le bas et constituant, par appui sur le bord du patin 40, moyen de positionnement transversal du creuset 4 et des moyens de maintien M par rapport aux rails 41-42.

Le levier d'appui 47 est coudé et est articulé sur l'axe 45 par un tourillon 62. A son extrémité opposée au tourillon, il est solidaire d'une barre longitudinale 63 s'étendant au-dessus des couvercles 4a des creusets 4, comporte à chacune'de ses extrémités, des portées d'appui constituées par des ronds 64 soudés sous sa face inférieure. Entre son articulation sur l'arbre 45 et la barre 63, le levier 47 comporte une lumière 65 qui est traversée par l'extrémité d'une tige filetée 66, en appui par sa tête sur la traverse 43. Un écrou 67, vissé sur l'extrémité de la tige filetée 66, prend appui sur le levier 47.

L'utilisation de ces moyens de maintien nécessite un pré-positionnement consistant, après mise en place de la traverse 43 sur le plan de joint des deux rails 41-42, à faire pivoter les leviers 46, jusqu'à ce que les creusets 4 viennent en appui sur la voie, puis à pousser transversalement l'ensemble des moyens de maintien, jusqu'à ce que les talons 60 des creusets soient en contact avec le bord externe des patins 40 des deux rails. A ce stade, l'écrou 54 de la pince est serré et le dispositif est ainsi solidement fixé aux deux rails.

Il est ensuite procédé à la mise en place du conducteur 2 en faisant pivoter l'un des leviers 46 pour permettre l'introduction de ce conducteur entre les deux creusets, puis à la mise en place des extrémités 2a de ce conducteur dans les rainures 10 des creusets. Après remplissage des creusets en mélange approprié et mise en place des couvercles, le levier 47, jusqu'alors en position escamotée, est basculé, jusqu'au contact de ses portées d'appui 64 sur les couvercles, et est serré au moyen de l'écrou 67. La mise à feu des deux creusets peut être effectuée séparément ou simultanément, si l'on a pris soin de disposer leurs canaux d'allumage en vis à vis. Comme dans les formes d'exécution précédentes, après refroidissement, ces moyens de maintien sont désolidarisés des rails.

## Revendications

1. Procédé pour braser in situ un élément métallique (2) sur un support métallique (3), du type mettant en oeuvre une réaction métallothermique réalisée dans un creuset (4) amovible pour fournir la chaleur nécessaire à la fusion de la brasure, sans utiliser pour la liaison le mélange produit par la réaction, consistant:
à donner à la partie (2a) devant être brasée, et appartenant à l'élément métallique (2)devant être fixé sur le support (3), une section transversale aplatie présentant deux grandes faces opposées (1a-1b),
- à imprégner de brasure (5), au moins l'une (1a) des grandes faces opposées de cette partie (2a),
- à plaquer cette face (1a) imprégnée de brasure sur une face du support (3), préalablement préparée pour la brasure,
- à plaquer sur l'autre grande face (1b) de la partie (2a) à braser un creuset (4) comportant un logement (10) de positionnement de cette partie, logement dont la paroi (9), apte à venir en contact avec cette face (1b), possède une épaisseur (e) la rendant perméable à l'apport calorifique engendré par la réaction métallothermique dans le creuset et constitue barrière au mélange fondu obtenu par cette réaction,
- et, après déclenchement de la réaction dans le creuset (4) et refroidissement, à retirer le creuset (4) contenant le mélange fondu.

2. Procédé selon la revendication 1, caractérisé en ce que le réglage de la température transmise à la brasure (3) est effectué par modification de l'épaisseur (e) de la paroi perméable (9).

3. Dispositif pour la mise en oeuvre du procédé selon l'une quelconque des revendications 1 et 2, du type comportant un creuset amovible (4) et des moyens de maintien (M), se fixant sur le support (3) sur lequel doit être brasé un élément métallique (2) et communiquant au creuset (4) un effort en direction du support, dispositif dans lequel le creuset (4) ne comporte qu'une chambre (6) de réception du mélange métallothermique (7) et du mélange d'amorçage (8) et cette chambre est munie d'une paroi (9) qui, perméable à l'apport calorifique de la réaction métallothermique, constitue un écran au mélange fondu obtenu par cette réaction et qui comporte une face externe (9a) apte à venir directement en appui sur la face (1b) de la partie (2a) devant être brasée sur le support (3) et délimite, avec au moins une autre face perpendiculaire (11), un logement (10) de positionnement transversal de cette partie (2a), tandis que ce creuset est monté dans les moyens de maintien (M) avec possibilité de coulissement suivant une direction sensiblement perpendiculaire à sa paroi (9), et que ces moyens de maintien (M) comportent des moyens effaçables (38-39, 63-64) aptes, en position de brasage, à prendre appui sur le creuset (4) , pour plaquer celui-ci exclusivement sur la partie (2a) à braser.

4. Dispositif selon la revendication 3, caractérisé en ce que le creuset (4) est constitué par un étui jetable, réalisé en matériau résistant au moins à une réaction exothermique et contenant une dose de mélange métallothermique avec sa dose de mélange d'amorçage.

5. Dispositif selon la revendication 3, caractérisé en ce que les moyens de maintien (M) comprennent deux barreaux magnétiques (26), montés libres en rotation sur des axes longitudinaux (25), parallèles à l'axe longitudinal du logement de positionnement (10) du creuset (4) et portés par des chapes verticales (24), solidaires d'un cadre (17), tandis que ce cadre, entourant avec jeu le corps du creuset (4), est muni sur l'une de ses traverses (18) d'une console (20) sur laquelle sont articulés, d'une part, un levier (37) apte à venir en appui élastique sur le creuset (4), et, d'autre part, un levier (36) d'actionnement du levier d'appui (38) précité.

6. Dispositif selon la revendication 5, caractérisé en ce qu'à ses extrémités supérieure et inférieure, le creuset (4) est ceinturé par des collerettes (23) dont les dimensions transversales sont supérieures à celles de l'ouverture (20) du cadre (17) dans laquelle il est monté coulissant, tandis qu'au moins l'un (19) des éléments du cadre (17) est monté de manière amovible sur les autres éléments (18) de ce cadre pour permettre la mise en place du creuset (4) dans celui-ci.

7. Dispositif selon la revendication 3, caractérisé en ce que les moyens de maintien (M) amovibles sont constitués par une traverse (43) dont l'une des extrémités est munie d'une pince de fixation (43-48) sur le support (40), par un longeron (44) solidaire de l'autre extrémité de la traverse (43) précitée, s'étendant parallèlement à l'axe longitudinal de la partie (2a) à braser et à distance du support (40) et portant un axe cylindrique (45), parallèle à lui, par au moins un levier de maintien (46), articulé sur l'axe (45) du longeron et portant à son extrémité libre un cadre (57) dans lequel le creuset (4) est monté en translation verticale entre des butées, et par un levier d'appui (47) qui, également articulé sur l'axe (45) du longeron, est muni, à son extrémité libre, d'une portée d'appui (64) sur le creuset (4) et comporte, entre son articulation et sa portée d'appui, des moyens (66 à 68) de serrage élastique le reliant à la traverse (43).

8. Dispositif selon la revendication 7, caractérisé en ce que, dans le cas de son application à la fixation par brasage d'un câble conducteur, de part et d'autre du plan de joint de deux rails (41-42), il comprend deux leviers de maintien (46), disposés de part et d'autre de la traverse (43) et portant chacun un creuset (4), et le levier d'appui (47) est solidaire d'une barre longitudinale (63) comportant une portée d'appui (64) à chacune de ses extrémités.

## Claims

1. Method for in situ brazing of a metal element (2) to a metal support structure (3), of the type employing a metallothermic reaction produced in a removable crucible (4) in order to supply the heat necessary for melting the braze, without using the mixture produced by the reaction for the joint, consisting:
- in giving the part (2a) which is to be brazed, forming part of the metal element (2) which is to be attached to the support structure (3), a flattened cross-section having two opposite large faces (1a-1b);
- in impregnating with braze (5) at least one (1a) of the opposite large faces of this part (2a);
- in pressing this braze-impregnated face (1a) against one face of the support structure (3), the latter face having been previously prepared for the braze;
- in pressing a crucible (4) against the other large face (1b) of the part (2a) to be brazed, this crucible including a housing (10) for positioning this part, the wall (9) of which housing, capable of coming into contact with this face (1b), has a thickness (e) making permeable to the heat generated by the metallothermic reaction in the crucible and forms a barrier to the molten mixture obtained by this reaction;
- and, after initiation of the reaction in the crucible (4) and cooling, in removing the crucible (4) containing the molten mixture.

2. Method according to Claim 1, characterized in that the temperature transmitted to the braze (3) is adjusted by modifying the thickness (e) of the permeable wall (9).

3. Apparatus for the implementation of the method according to either of Claims 1 and 2, of the type including a removable crucible (4) and holding means (M), being attached to the support structure (3) to which a metal element (2) is to be brazed and applying a force to the crucible (4) in the direction of the support structure, in which apparatus the crucible (4) includes only a chamber (6) for receiving the metallothermic mixture (7) and the initiating mixture (8) and this chamber is furnished with a wall (9) which, being permeable to the heat of the metallothermic reaction, forms a screen to the molten mixture obtained by this reaction and which includes an outer face (9a) capable of coming to bear directly on the face (1b) of the part (2a) which is to be brazed to the support structure (3) and delimits, with at least one other perpendicular face (11), a housing (10) for the transverse positioning of this part (2a), while this crucible is mounted in the holding means (M) with the possibility of sliding in a direction substantially perpendicular to its wall (9) and these holding means (M) include retractable means (38-39, 63-64) capable, in the brazing position, of bearing on the crucible (4) in order to press the latter exclusively against the part (2a) to be brazed.

4. Apparatus according to Claim 3, characterized in that the crucible (4) is formed by a disposable casing, made of material capable of withstanding at least an exothermic reaction and containing a dose of metallothermic mixture with its dose of initiating mixture.

5. Apparatus according to Claim 3, characterized in that the holding means (M) comprise two bar magnets (26) which are mounted so as to rotate freely on longitudinal spindles (25), parallel to the longitudinal axis of the positioning housing (10) of the crucible (4) and supported by vertical clevises (24) fastened to a frame (17), while this frame, loosely surrounding the body of the crucible (4), is furnished on one of its transverse members (18) with a console (20) on which are pivoted, on the one hand, a lever (37) capable of coming to bear elastically on the crucible (4) and, on the other hand, a lever (36) for actuating the aforementioned bearing lever (38).

6. Device according to Claim 5, characterized in that the crucible (4), at its upper and lower ends, is girdled by flanges (23) whose transverse dimensions are greater than those of the opening (20) in the frame (17) in which it is slidably mounted, while at least one (19) of the elements of the frame (17) is mounted in a removable manner on the other elements (18) of this frame in order to allow the crucible (4) to be put into place in the latter.

7. Device according to Claim 3, characterized in that the removable holding means (M) are formed by a transverse member (43), one of the ends of which is furnished with a clamp (43-48) for attaching to the support structure (40), by a longitudinal member (44) fastened to the other end of the aforementioned transverse member (43), extending, some distance away from the support structure (40), parallel to the longitudinal axis of the part (2a) to be brazed and supporting a cylindrical spindle (45), parallel to it, by at least one holding lever (46), pivoted to the spindle (45) of the longitudinal member and, at its free end, supporting a frame (57) in which the crucible (4) is mounted so as to move vertically between stops, and by a bearing lever (47) which, also being pivoted to the spindle (45) of the longitudinal member, is furnished, at its free end, with a member (64) for bearing on the crucible (4) and includes, between its pivoting point and its bearing member, elastic clamping means (66 to 68) connecting it to the transverse member (43).

8. Device according to Claim 7, characterized in that, in the case of its application to the attachment of a conducting cable by brazing, it comprises, on each side of the joint plane of two rails (41-42), two holding levers (46) arranged on each side of the transverse member (43), each supporting a crucible (4), and the bearing lever (47) is fastened to a longitudinal bar (63) which includes a bearing member (64) at each of its ends.

## Patentansprüche

1. Verfahren zum In-situ-Löten eines metallischen Elements (2) auf einen metallischen Träger (3) der Art, welche eine metallothermische Reaktion verwendet, die in einem abnehmbaren Tiegel (4) herbeigeführt wird, um die zum Schmelzen des Lotes notwendige Wärme zu liefern, ohne für die Verbindung die durch die Reaktion entstandene Mischung zu verwenden, umfassend:
- man verleiht dem Teil (2a), das zu löten ist und dem Metallteil (2) angehört, welches an dem Träger (3) zu befestigen ist, einen abgeflachten Querschnitt, der zwei große, entgegengesetzte Flächen (1a-1b) aufweist,
- man bringt Lot (5) auf wenigstens eine (1a) der großen entgegengesetzten Flächen dieses Teils (2a) auf,
- man drückt diese mit Lot bedeckte Fläche (1a) gegen eine zuvor für die Lötung vorbereitete Fläche des Trägers (3),
- man drückt einen Tiegel (4) auf die andere große Fläche (1b) des zu lötenden Teils (2a), wobei der Tiegel eine Positionieraufnahme (10) für dieses Teil umfaßt, deren zum direkten Kontakt mit dieser Fläche (1b) geeignete Wand (9) eine Dicke (e) besitzt, die sie durchlässig für das durch die metallothermische Reaktion in dem Tiegel erzeugte Wärmeangebot macht, und eine Barriere für die durch diese Reaktion erhaltene geschmolzene Mischung bildet,
- und man zieht nach dem Einsetzen der Reaktion im Tiegel (4) und der Abkühlung den die geschmolzene Mischung enthaltenden Tiegel (4) zurück.

2. Verfahren nach Anspruch 1,
**dadurch gekennzeichnet,**
daß die Einstellung der auf das Lot (3) übertragenen Temperatur durch Anderung der Dicke (e) der durchlässigen Wand (9) durchgeführt wird.

3. Vorrichtung zum Durchführen des Verfahrens nach einem der Ansprüche 1 und 2 der Art, welche einen abnehmbaren Tiegel (4) und Haltemittel (M) umfaßt, die sich an dem Träger (3) festhalten, auf den ein metallisches Element (2) gelötet werden soll und den Tiegel (4) in Richtung des Trägers belasten, wobei bei der Vorrichtung der Tiegel (4) nur eine Kammer (6) zur Aufnahme der metallothermischen Mischung (7) und der Initialmischung (8) umfaßt und diese Kammer mit einer Wand (9) versehen ist, die, durchlässig für das Wärmeangebot der metallothermischen Reaktion, eine Abschirmung für die durch diese Reaktion erhaltene geschmolzene Mischung bildet und die eine Außenfläche (9a) umfaßt, die geeignet ist, direkt zur Anlage an der Fläche (1b) des auf den Träger (3) zu lötenden Teils (2a) zu kommen, und mit wenigstens einer anderen, senkrechten Fläche (11) eine Aufnahme (10) zur Querpositionierung dieses Teils (2a) begrenzt, wohingegen dieser Tiegel in den Haltemitteln (M) mit der Möglichkeit der Verschiebung in eine Richtung im wesentlichen senkrecht zu seiner Wand (9) montiert ist und diese Haltemittel (M) lösbare Mittel (38-39, 63-64) umfassen, die in Lötstellung zur Anlage an dem Tiegel (4) geeignet sind, um diesen ausschließlich an das zu lötende Teil (2a) zu drücken.

4. Vorrichtung nach Anspruch 3,
**dadurch gekennzeichnet,**
daß der Tiegel (4) durch ein Wegwerfbehältnis gebildet ist, das aus einem Material gebildet ist, das wenigstens einer exothermischen Reaktion widersteht und eine Dosis von metallothermischer Mischung mit ihrer Dosis von Initialmischung enthält.

5. Vorrichtung nach Anspruch 3,
**dadurch gekennzeichnet,**
daß die Haltemittel (M) zwei Magnetstäbe (26) umfassen, die frei drehbar an Längsachsen (25) montiert sind, welche parallel zur Längsachse der Positionieraufnahme (10) des Tiegels (4) sind und welche von mit einem Rahmen (17) verbundenen vertikalen Bügeln (24) getragen sind, während dieser den Tiegelkörper (4) mit Spiel umschließende Rahmen an der einen seiner Querstreben (18) mit. einem Befestigungsteil (20) versehen ist, an welchem einerseits ein Hebel (37) angelenkt ist, der zur elastischen Anlage an dem Tiegel (4) geeignet ist, und andererseits ein Betätigungshebel (36) des Anlagehebels (38) angelenkt ist.

6. Vorrichtung nach Anspruch 5,
**dadurch gekennzeichnet,**
daß der Tiegel (4) an seinem oberen und unteren Ende von Kragen (23) umfaßt ist, deren Querabmessungen größer sind als die der Öffnung (20) des Rahmens (17), in der er verschiebbar montiert ist, während wenigstens eines (19) der Elemente des Rahmens (17) derart lösbar an den anderen Elementen (18) dieses Rahmens montiert ist, daß das Einsetzen des Tiegels (4) in denselben ermöglicht ist.

7. Vorrichtung nach Anspruch 3,
**dadurch gekennzeichnet,**
daß die abnehmbaren Haltemittel (M) gebildet werden durch eine Querstrebe (43), deren eines Ende mit einer Zange (43-48) zum Befestigen an dem Träger (40) versehen ist,
durch einen mit dem anderen Ende der Querstrebe (43) verbundenen Längsträger (44), der sich parallel zur Längsachse des zu lötenden Teils (2a) und im Abstand vom Träger (40) erstreckt und eine zylindrische Achse (45) trägt, die parallel zu ihm ist,
durch wenigstens einen Haltehebel (46), der an der Achse (45) des Längsträgers angelenkt ist und an seinem freien Ende einen Rahmen (57) trägt, in dem der Tiegel (4) zwischen Widerlagern vertikal verschiebbar montiert ist und
durch einen Anlagehebel (47), der - ebenfalls angelenkt an der Achse (45) des Längsträgers - an seinem freien Ende mit einem Bereich (64) zur Anlage an dem Tiegel (4) versehen ist und zwischen seinem Gelenk und seinem Anlagebereich Mittel (66-68) zum elastischen Klemmen umfaßt, die ihn mit der Querstrebe (43) verbinden.

8. Vorrichtung nach Anspruch 7,
**dadurch gekennzeichnet,**
daß sie im Falle ihrer Anwendung zur Lötbefestigung eines Leiterkabels beidseits der Verbindungsebene von zwei Schienen (41-42) zwei Haltehebel (46) umfaßt, die beidseits der Querstrebe (43) angeordnet sind und jeweils einen Tiegel (4) lagern, und der Anlagehebel (47) mit einem Längsbalken (63) verbunden ist, der an jedem seiner Enden einen Anlagebereich (64) umfaßt.
